# EUROPEAN PATENT APPLICATION

(11) **EP 2 065 654 A2**
(43) Date of publication of application: **03.06.2009**
(21) Application number: 08170237.5
(22) Date of filing: 28.11.2008
(51) Int. Cl.: F24D 11/00, F24D 19/10, F24H 1/20

(54) **Bivalent Water Heating System**

(30) Priority: 30.11.2007 US 5077 P; 21.11.2008 US 313529
(71) Applicant: Heat Transfer Products, Inc., East Freetown, MA 02717 (US)
(72) Inventor: Davis, David, East Freetown, Massachusetts 02717 (US)
(74) Representative: Slingsby, Philip Roy

(57) **Abstract**

A bivalent water-heating system includes a water-storage tank having at least one wall defining an interior storage cavity configured for storing water to be heated. The storage cavity includes an upper-cavity and lower-cavity portions. A non-solar heating unit is situated at least partially in the upper-cavity portion and includes a combustion chamber defined by at least one wall through which heat produced by the combustion of fuel is transferred to stored water located within the upper-cavity portion. Water stored in the lower-cavity portion is heated by a solar heating subsystem that circulates a heat-transferring fluid between a solar collector that converts solar radiation to heat energy and a heat exchanger situated within the lower-cavity portion such that heat-transferring fluid (i) absorbs heat at the solar collector, (ii) is routed to the heat exchanger where the heat-transferring fluid transfers heat to water stored in the lower-cavity portion, and (iii) is returned from the heat exchanger to the solar collector to absorb additional heat.

## Description

### BACKGROUND

With increasing costs of fossil fuels, rising environmental consciousness, and a desire to decrease dependence on foreign sources of energy, many industries are actively researching and developing apparatus that utilize energy provided by so-called renewable sources. Renewable energy sources include sunlight, wind, tidal energy, hydroelectricity and geothermal heat. Solar energy has been used to produce electricity directly by capturing the sun's light in photovoltaic arrays, for example. Alternatively, a solar water heater incorporates a solar collector (usually a panel) that heats a fluid which, in turn, heats stored water through a heat exchanger. One illustrative example of such a water-heating system includes a set of flat-plate solar-thermal collectors that are situated on a roof or in an open space at ground level. Each solar-thermal collector includes an absorber plate to which fluid circulation conduits are attached. The absorber plate, which is usually coated with a dark selective surface, assures the conversion of the sun's radiation into heat, while a heat-transferring fluid (HTF) circulating through the conduits carries heat away from the absorber where it can be used or stored. In a typical solar water heating system, the heated heat-transferring fluid is circulated by a pump through a heat exchanger situated within a tank of water to be heated. As it passes through the heat exchanger, the heat-transferring fluid transfers a portion of its heat to the stored water and is then circulated back to the absorber to be reheated.

As those acquainted with the relevant arts are aware, a system that includes a supply of water heated by solar energy typically requires a complementary supply of water heated by a source of energy other than solar. More specifically, it will be readily appreciated that a supply of water heated only by solar energy will be heated only when the sun is shining and, therefore, such a water supply will not be heated overnight or during overcast and rainy periods. Accordingly, in order for there to be always available a supply of hot water, a water heating system that depends in part on solar-heated water requires either (i) a burner that consumes a combustible fuel such as natural gas, propane or oil or, in the alternative, (ii) an electric heater including electrically resistive heating elements. Early attempts to include complementary solar and non-solar heating sources in a water heating system relied on separate tanks; a first tank of water heated by a non-solar energy source and a second tank of water heated by a solar heat exchanger. Such a system draws hot water from the solar-heated source when there is sufficient solar heating to maintain the water in the second tank above a threshold temperature. In those circumstances in which the solar-heated supply cannot be maintained above the predetermined threshold temperature as a result of insufficient sunlight, the system supplies hot water from the first tank of water heated by non-solar energy. Among other disadvantages of previous two-tank systems is the loss of space required for two tanks and the requisite additional connective plumbing.

In response to the disadvantages posed by a two tank system, efforts have been made to consolidate non-solar and solar heating elements into a single tank. However, while such consolidated systems alleviate some of the disadvantages associated with dual-tank systems, they introduced their own disadvantages. For instance, current single-tank, dual-heating-element (i.e., solar and non-solar) systems are designed such that the stored water is heated from the bottom of the tank upward, irrespective of whether the water, at any particular point in time, is being heated by the solar or non-solar energy source. Heating upwardly from the bottom comports with the prevailing wisdom associated with, for example, traditional single-heat-source systems such as oil or gas fired water heaters in which it is desirable to heat the stored water supply as uniformly as possible. Accordingly, in a consolidated solar/non-solar water heating system that heats from the bottom up, the entire supply of water within the single tank is maintained at a high and relatively uniform temperature from top to bottom. A consequence of such a design is that the solar heat exchanger is immersed in a supply of stored water that is constantly maintained at a temperature sufficiently high to provide, for example, hot tap water in a home. Under such conditions, the efficiency of the solar heating source is severely diminished because the rate and efficiency of heat transfer from the heat-transferring fluid (HTF) of the solar heat exchanger to the stored water to be heated is a function of the magnitude of the temperature differential between the HTF and the stored water. In this sense, while a dual-tank system is accompanied by space-related disadvantages, the solar-heating portion of such a system is more efficient than the solar-heating portion of a bottom-to-top heating single-tank, dual-heating-element system because the solar heat exchanger in the dual-tank system is not working to add heat to stored water constantly maintained at a higher temperature.

Accordingly, there exists a need for a water heating system that consolidates into a single tank both solar and non-solar heating elements while realizing solar-heating efficiencies greater than those attainable by previous consolidated solar/non-solar water heating systems.

### SUMMARY

In accordance with a first illustrative set of embodiments, a bivalent water-heating system includes a tank having an upper end, a lower end and at least one wall defining an interior storage cavity configured for storing a predetermined quantity of water. The storage cavity has an upper-cavity portion and a lower-cavity portion situated below the upper-cavity portion, with the upper-cavity and lower-cavity portions being in mutual fluid communication. In a typical embodiment, the tank is in the form of an elongated, vertically oriented cylinder, although it is to be understood that the tank may be alternatively configured.

Water stored within the storage cavity is alternatively heated by a non-solar energy source and a solar energy source. In various versions, a non-solar heating unit includes a combustion chamber situated at least partially within the upper-cavity portion.
The combustion chamber is defined by at least one heat-conductive wall such that, when the combustion chamber is immersed in water stored in the upper-cavity portion, and a combustible fuel is selectively burned with the combustion chamber, heat produced by the combustion is transferred to the water surrounding the combustion chamber. In illustrative, non-limiting alternative embodiments, the combustion chamber is configured for the combustion of at least one of oil, propane, and natural gas.

A typical embodiment of the bivalent water-heating system includes a solar heating subsystem including a heat exchanger, a solar collector and fluid conduits configured for circulating a heat-transferring fluid through the solar collector and the heat exchanger. In each of various versions, the heat exchanger is in the form of a tubular helix situated within the lower-cavity portion of the tank. The tubing from which the helix is formed is fabricated from a heat conductive material such as copper, cast iron or brass, by way of non-limiting example. The solar collector is remotely located from the heat exchanger and includes an absorber that converts solar radiation to heat energy. In various versions, the absorber is configured as a panel that is mounted to a surface at an angle calculated to optimize solar-energy collection. The solar collector and heat exchanger are rendered in mutual fluid communication by heat-transferring-fluid input and heat-transferring-fluid output conduits. More specifically, the heat exchanger, solar collector, and input and output conduits are incorporated in a circulatory fluid pathway that contains a heat-transferring fluid. Heat-transferring fluid that is caused to flow over the absorber collects heat from the absorber and flows through the input conduit for delivery to the heat exchanger. As the heated heat-transferring fluid passes through the heat exchanger, it transfers heat to the water stored in the lower-cavity portion of the storage tank. Heat-transferring fluid exiting the heat exchanger is returned, through the output conduit, to the absorber to absorb heat, thereby completing a heat-absorption/heat-transference cycle.

As previously stated, the upper-cavity and lower-cavity portions are in mutual fluid communication. However, under predetermined conditions, the efficiency of heat-transference from the heat-transferring fluid within the heat exchanger to the water in which the heat exchanger is immersed in the lower-cavity portion is enhanced when the combustion chamber and heat exchanger are situated such that, when the tank is vertically oriented for use, no portion of the heat exchanger and the combustion chamber are at the same height within the storage cavity. That is, in various versions, as viewed along a vertical axis, the highest portion of the heat exchanger situated within the storage cavity is separated from the lowest portion of the non-solar heating unit situated within the storage cavity, or at least the combustion chamber thereof, by a predetermined vertical-separation distance. Arranging the heat exchanger and combustion chamber such that they are vertically spaced facilitates a measurable temperature differential between a portion of stored water located in the lower-cavity portion and a portion of stored water located in the upper-cavity portion, at least when the heat exchanger is inactive for an extended period of time. In this manner, the water stored within the storage cavity, though physically continuous, can be conceptualized, from a thermodynamic standpoint, as first and second stacked columns of water, wherein water within the first, upper column exhibits an average temperature that is higher than the average temperature of water within the second, lower column. In any event, relative to previous attempts to consolidate non-solar and solar heating elements into a single tank in which water is heated from the bottom up irrespective of whether the water is being heated by the solar or non-solar source, efficiency of the solar source is improved by situating the combustion chamber and solar heat exchanger in various embodiments such that there is less than total overlap along a vertical axis of the solar exchanger and the combustion chamber. More specifically, while situating the combustion chamber and solar heat exchanger such that no portion of the heat exchanger and the combustion chamber are at the same height within the storage cavity is preferable, solar-heating efficiency is improved relative to previous attempts when, for example, at least a majority of the vertical extent of the combustion chamber is situated above at least a majority of the vertical extent of the heat exchanger.

The general configuration described above allays drawbacks associated with prior systems as identified in the background, while simultaneously realizing advantages of the same. More specifically, an embodiment of the present bivalent water-heating system (i) realizes the space saving associated with a single-tank system, (ii) maintains a readily available reserve of "fully-heated" water for immediate use in the upper-cavity portion, and (iii) at least during extended periods of solar-heating inactivity, maintains a reserve of cooler water, relative to the water in the upper-cavity portion, such that, when the solar heating subsystem is activated, the efficiency of heat transfer through the heat exchanger is enhanced. It will be appreciated that it is not the temperature differential between water in the upper and lower cavity portions per se that enhances heat-transfer efficiency, it is that, under the conditions facilitated by the design, there are extended periods when the temperature differential between the heat-transferring fluid in the heat exchanger and water stored in the lower-cavity portion is greater than it would be if the heat-transferring fluid were transferring heat to a quantity of stored water maintained at a relatively uniform minimum temperature through bottom-to-top heating by the non-solar (i.e., combustion) heating source. In this sense, it will be appreciated that embodiments of the present invention rely on a temperature-grading principle amounting to an explicit repudiation of the traditional bottom-to-top heating principle.

Representative, non-limiting embodiments are more completely described and depicted in the following detailed description and the accompanying drawings.

### BRIEF DESCRIPTION OF THE DRAWINGS

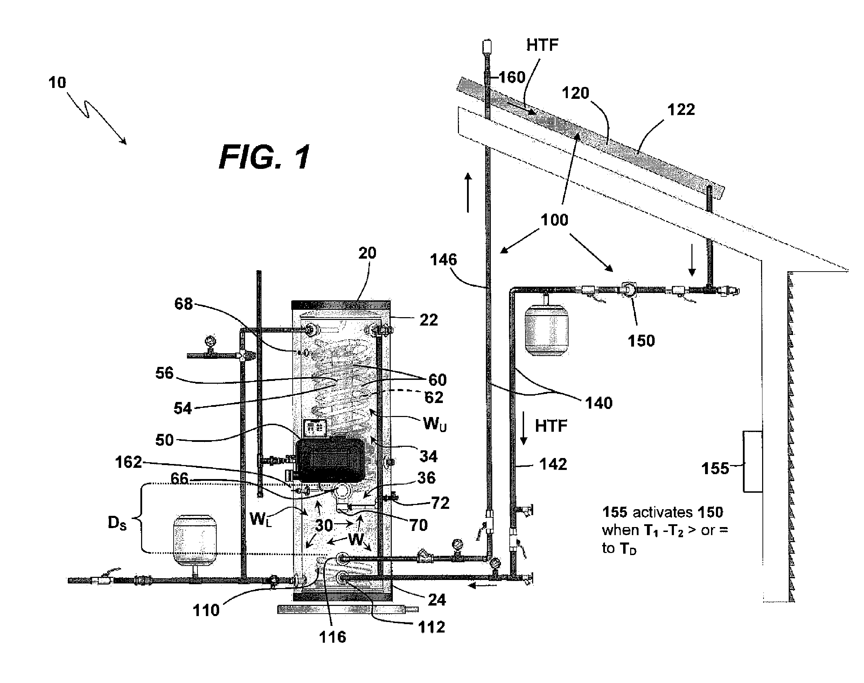

FIG. 1 schematically depicts an illustrative bivalent water-heating system including a non-solar heating unit and a solar heat exchanger.

### DETAILED DESCRIPTION

The following description of various embodiments of a bivalent water-heating system is illustrative in nature and is therefore not intended to limit the scope of the invention or its application of uses.

Referring to FIG. **1****,** an illustrative bivalent water-heating system **10** includes a water-storage tank **20** having an upper end **22,** a lower end **24** and at least one side wall **28** extending between the upper and lower ends **22** and **24** and defining an interior storage cavity **30** configured for storing a predetermined quantity of water **W.** Defined in association with the storage cavity **30** is an upper-cavity portion **34** and a lower-cavity portion **36** situated below the upper-cavity portion **34.** The upper-cavity portion **34** and the lower-cavity portion **36** are in mutual fluid communication such that, when the entire storage cavity **30** is filled with water **W,** there is physical continuity between water **W** located in the upper-cavity portion **34** and water **W** located in the lower-cavity portion **36.** However, because that portion of the water **W** in the upper-cavity portion **34** is heated primarily by apparatus different from the apparatus by which that portion of the water **W** in the lower-cavity portion **36** is primarily heated, as explained in greater detail below, the reference characters **W_{U}** and **W_{L}** are used, where appropriate, to mutually differentiate those portions of the water **W** stored in, respectively, the upper-cavity portion **34** and the lower-cavity portion **36.**

Referring still to FIG. 1, a non-solar heating unit **50** includes a combustion chamber **54** at least a portion of which is situated within the upper-cavity portion **34** of the tank **20.** The combustion chamber **54** is defined by at least one heat-conductive wall **56** such that, when the combustion chamber **54** is immersed in water **W_{U}** stored in the upper-cavity portion **34,** and a combustible fuel is selectively burned within the combustion chamber **54,** heat produced by the combustion is transferred to the water **W_{U}** surrounding the combustion chamber **54.** At least one exhaust conduit **60** is situated in fluid communication with the combustion chamber **54.** The exhaust conduit 60 channels combustion gases from the interior of the combustion chamber **54** to the exterior of the tank through an exhaust port **66.** As combustion gas cools, a portion of the same condenses on the inner surface **62** of the exhaust conduit **60** and liquid waste (condensate) collects in a condensate collection reservoir **70** that is typically located below the exhaust port **66.** Condensate collected in the collection reservoir **70** is drained to the exterior of the storage tank **20** through a drainage line **72** leading from the collection reservoir **70.** Because heat is transferred to the inner surface **62** of the exhaust conduit **60,** the exhaust conduit **60** of various versions is fabricated from a heat-conductive material so that heat transferred to the conduit **60** by condensing combustion gas is transferred to the water **W_{U}** stored in the upper-cavity portion **34.** In the illustrative version of FIG. 1, the exhaust conduit **60** is connected to the upper portion of the combustion chamber **54** and winds helically and downwardly about the combustion chamber **54,** though out of contact therewith, to the exhaust port **66.** The helical exhaust conduit **60** provides an elongated path through which exhaust gases and condensate must travel to exit the system, thereby increasing the percentage of heat carried by each of the exhaust gas and the condensate that is transferred through the exhaust conduit **60** to the water **W_{U}** in which the conduit **60** is immersed within the upper-cavity portion **34.**

The non-solar heating unit **50** is selectively activated by a thermostat **68** that is situated in thermal communication with water **W_{U}** in the upper-cavity portion **34** of the storage tank **20.** The thermostat **68** is set in order to maintain the water **W_{U}** in which the combustion chamber **54** is immersed at a predetermined minimum temperature **T_{M}.** The temperature **T_{M}** corresponds, by way of non-limiting example, to "fully heated" tap water suitable for residential use.

Water **W_{L}** stored in the lower-cavity portion **36** is primarily heated by a solar heating subsystem **100.** The solar heating subsystem **100** includes a heat exchanger **110,** a solar collector **120** and fluid conduits **140** configured for circulating a heat-transferring fluid HTF through both the solar collector **120** and the heat exchanger **110.** The heat exchanger **110** is situated in the lower-cavity portion **36** of the storage tank **20** and is prototypical in that it is configured as a heat-conductive, tubular helix, and thus provides an elongated path over which heat transfer can readily occur. The solar collector **120** is remotely located from the heat exchanger **110** and includes an absorber **122** that converts solar radiation to heat energy. In the version depicted in FIG. 1, the absorber **122** is configured as a panel that is mounted to a surface (i.e., a roof) at an angle calculated to optimize solar-radiation collection.

As previously stated, the solar collector **120** and heat exchanger **110** are rendered in mutual fluid communication by fluid conduits **140.** The fluid conduits **140** include at least one heat-transferring-fluid input conduit **142** and at least one heat-transferring-fluid output conduit **146.** The heat exchanger **110,** solar collector **120,** and input and output conduits **142** and **146** define a "closed loop," circulatory fluid pathway that contains a heat-transferring fluid **HTF.** The heat-transferring fluid **HTF** is circulated through the solar heating subsystem **100** by a circulator **150,** which is typically an electric pump. With arbitrary reference to the solar collector **120** as the starting point of a heat-absorption/heat-transference cycle, heat-transferring fluid **HTF** is caused to flow over the absorber **122** and collect heat. Heated heat-transferring fluid **HTF** exiting the absorber **122** is channeled to the input conduit **142** and travels through the input conduit **142** to an input end **112** of the heat exchanger **110.** As the heated heat-transferring fluid **HTF** passes through the heat exchanger **110,** it transfers heat to the water **W_{L}** stored in the lower-cavity portion **36** of the storage tank **20.** Heat-transferring fluid **HTF** from which heat has been transferred exits the heat exchanger **110** through an output end **116** and is returned, through the output conduit **146,** to the absorber **122,** thereby completing the heat-absorption/heat-transference cycle.

As discussed in the summary, various versions of the bivalent water-heating system **10** are configured such that the highest portion of the heat exchanger **110** is separated (i.e., axially or vertically displaced) from the lowest portion of the non-solar heating unit **50,** or at least the combustion chamber **54** thereof, by a predetermined vertical-separation distance **D_{S}.** Arranging the heat exchanger **110** and combustion chamber **54** such that they are vertically spaced nonetheless facilitates a measurable temperature differential between water **W_{L}** stored in the lower-cavity portion **36** and water **W_{U}** in the upper-cavity portion **34,** at least when the circulator **150** and, thus, the heat exchanger **110** is inactive for an extended period of time. It will be appreciated that the water **W_{U}** in the locality of the thermostat **68** associated with the non-solar heating unit **50** will be heated to a point that the thermostat **68** will cease the combustion process before thermodynamic equilibrium between the water **W_{U}** and the water **W_{L}** is attained and thus, in the absence of water-heating contributions from the heat exchanger **110,** the aforementioned temperature differential is sustainable. The relatively hotter water **W_{U}** in the upper-cavity portion **34** constitutes a reserve of "fully heated" water that is available on demand, while the reserve of cooler water **W_{L}** in the lower-cavity portion **36** is available to accept heat through the heat exchanger **110** whenever the heat exchanger is activated. When the water **W_{L}** in the lower-cavity portion **36** is at a temperature lower than the temperature of the water **W_{U}** in the upper-cavity portion, heat transference to the water **W_{L}** is more efficient than it would be if the temperature of the water **W_{L}** were equal to or greater than the temperature of the water **W_{U}.** As water **W** is warmed by either the non-solar heating unit **50** or the solar heat exchanger **110,** the direction of heat transfer through the water **W (W_{L}** and/or **W_{U})** will be primarily upward through natural convective heat transfer, so long as the water **W** within the tank **20** is not stirred or agitated. Heat transferred through the heat exchanger **110** to the water **W_{L}** in the lower cavity portion **36** will migrate upwardly into the upper-cavity portion **34,** thereby contributing to the maintenance of the target minimum temperature for the "on-demand" water reserve in the upper-cavity portion **34** and reducing the amount of combustive heat production required.

The circulator **150** associated with the solar heating subsystem **100** is selectively activated and deactivated by a solar controller **155** depending on the presence or absence of a predetermined temperature differential between a first temperature **T₁** at the solar collector **120** and a second temperature **T₂** indicative of the temperature of water **W_{L}** stored in the lower-cavity portion **36.** More specifically, the circulator **150** will cause heat-transferring fluid **HTF** to circulate only when the difference between **T₁** and **T₂** is greater than or equal to some predetermined minimum temperature differential **T_{D}.** Moreover, as the differential **T_{D}** is defined above, the differential **T_{D}** should be a predetermined positive number when the circulator **150** is active. Accordingly, for instance, if the water **W_{L}** in the lower-cavity portion is at a temperature **T₂** that is higher than the temperature **T₁** at the solar collector **120** during a snowy evening, for example, the running of the circulator **150** would actually counterproductively lower the temperature of the water **W_{L}.** Additionally, there is no benefit to be realized in running the circulator **150** when **T₁** = **T₂** (i.e., when **T_{D}** = 0). As stated in the summary, heat-transfer efficiency increases as the difference in temperature between the heat-transferring fluid **HTF** and the water **W_{L}** in the lower-cavity portion **36** increases and, conversely, decreases as the aforementioned temperature difference becomes smaller. It will be appreciated that, although heat-transferring fluid **HTF** heated at the absorber **120** will lose some heat as it travels along the input conduit **142,** a temperature **T₁** taken at the solar collector **120** provides the most accurate indication of the temperature of heat-transferring fluid **HTF** that the system is capable of delivering to the heat exchanger **110** under a particular set of conditions including, by way of non-limiting example, the length of the input conduit **142** and the amount of heat per unit length of the input conduit **142** that is lost to the environment under a specified set of environmental conditions (e.g. ambient temperature). In order to facilitate temperature-differential-dependent activation and deactivation of the circulator **150,** the solar controller **155** is communicatively linked, either wirelessly or by hardwiring, to a first temperature sensor **160** situated in thermal communication with a predetermined portion of the solar collector **120** and a second temperature sensor **162** situated in thermal communication with water **W_{L}** stored in the lower-cavity portion **36** of the storage tank **20.** In various versions, the solar controller **155** is programmable with alternative differential set points to optimize efficiency and performance.

The foregoing is considered to be illustrative of the principles of the invention. Furthermore, since modifications and changes to various aspects and implementations will occur to those skilled in the art without departing from the scope and spirit of the invention, it is to be understood that the foregoing does not limit the invention as expressed in the appended claims to the exact constructions, implementations and versions shown and described.

## Claims

1. A bivalent water-heating system (10) comprising:
a water-storage tank (20) with an interior storage cavity configured for storing a quantity of water (W) to be heated, the storage cavity including upper-cavity (34) and lower-cavity (36) portions that are in mutual fluid communication;
a non-solar heating unit (50) situated at least partially within the upper-cavity portion and including at least one heat-conductive wall (56) through which heat produced by the non-solar heating unit is transferred to water stored within the upper-cavity portion;
a solar heating subsystem (100) including, in a circulatory fluid pathway, a solar collector (120) that converts solar radiation to heat energy, a heat exchanger (110) situated within the lower-cavity portion, and fluid conduits (140) rendering the solar collector and heat exchanger in mutual fluid communication; and
a circulator (150) that is selectively activated to circulate a heat-transferring fluid through the fluid pathway in response to the presence of a predetermined temperature differential between a first temperature at the solar collector and a lower second temperature indicative of the temperature of water stored in the lower cavity portion such that, when the circulator is activated, the circulating heat-transferring fluid (i) absorbs heat at the solar collector, (ii) is delivered to the heat exchanger where the heat-transferring fluid transfers heat to water stored in the lower-cavity portion, and (iii) is returned from the heat exchanger to the solar collector to absorb additional heat.

2. The bivalent water-heating system of claim 1 wherein the non-solar heating unit (50) comprises a combustion chamber (54) situated at least partially within the upper-cavity portion and within which a combustible fuel is selectively burned, the combustion chamber being defined by at least one heat-conductive wall (56) through which heat produced by the combustion of the combustible fuel is transferred to stored water located within the upper-cavity portion

3. The bivalent water-heating system of claim 2 wherein at least a majority of the vertical extent of the combustion chamber (54) is situated above at least a majority of the vertical extent of the heat exchanger (110).

4. The bivalent water-heating system of claim 2 wherein, as viewed along a vertical axis, the highest portion of the heat exchanger (110) situated within the storage cavity is separated from the lowest portion of the combustion chamber (54) situated within the storage cavity by a predetermined vertical-separation distance such that, at least when the heat exchanger is inactive for an extended period of time, a measurable temperature gradient is maintained between a portion of stored water located in the lower-cavity portion and a portion of stored water located in the upper-cavity portion.

5. The bivalent water-heating system of claims 2 or 4 wherein the combustion chamber (54) is configured for the combustion of at least one of oil, propane, and natural gas.

6. The bivalent water-heating system of claims 4 or 5 wherein the heat exchanger (110) is formed as a tubular helix.

7. The bivalent water-heating system of claim 6 wherein the heat exchanger (110) is fabricated from at least one of (i) copper, (ii) cast iron, and (iii) brass.

8. A bivalent water-heating system (110) comprising:
a water-storage tank (20) having an upper end (22), a lower end (24) and at least one wall (28) defining an interior storage cavity (30) configured for storing a predetermined quantity of water (W), the storage cavity including an upper-cavity portion (34) and a lower-cavity portion (36) situated below the upper-cavity portion;
a non-solar heating unit (50) including a combustion chamber (54) situated at least partially within the upper-cavity portion and within which a combustible fuel is selectively burned, the combustion chamber being defined by at least one heat-conductive wall (56) through which heat produced by the combustion of the combustible fuel is transferred to stored water located within the upper-cavity portion; and
a solar heating subsystem including (i) a heat exchanger (110) situated within the lower-cavity portion of the tank, (ii) a solar collector (120) remotely located from the heat exchanger and including an absorber (122) that converts solar radiation to heat energy, (iii) an heat-transferring-fluid input conduit (142), and (iv) a heat-transferring fluid output conduit (146);
wherein the heat exchanger, the solar collector, the input conduit and the output conduit are incorporated in a circulatory fluid pathway such that, when the heat exchanger is immersed in stored water located within the lower-cavity portion, heat-transferring fluid that is caused to flow through the fluid pathway (i) absorbs heat from the absorber, (ii) flows through the input conduit to the heat exchanger, where the heat-transferring fluid transfers heat to the stored water, and (iii) is returned from the heat exchanger to the solar collector through the output conduit.

9. The bivalent water-heating system of claim 8 further comprising a circulator (150) that is selectively activated to circulate the heat-transferring fluid through the fluid pathway in response to the presence of a predetermined temperature differential between a first temperature at the solar collector (120) and a lower second temperature indicative of the temperature of water stored in the lower cavity portion (36).

10. The bivalent water-heating system of claims 8 or 9 wherein the combustion chamber (54) is configured for the combustion of at least one of oil, propane, and natural gas.

11. The bivalent water-heating system of claims 8, 9 or 10 wherein at least a majority of the vertical extent of the combustion chamber (54) is situated above at least a majority of the vertical extent of the heat exchanger (110).

12. The bivalent water-heating system of claims 8, 9, 10 or 11 wherein, as viewed along a vertical axis, the highest portion of the heat exchanger (110) situated within the storage cavity is separated from the lowest portion of the combustion chamber situated within the storage cavity by a predetermined vertical-separation distance such that, at least when the heat exchanger is inactive for an extended period of time, a measurable temperature gradient is maintained between a portion of stored water located in the lower-cavity portion and a portion of stored water located in the upper-cavity portion.
